**Europäisches Patentamt**

**European Patent Office**

**Office européen des brevets**

(11) Veröffentlichungsnummer: **0 130 437**
**A2**

# (12) EUROPÄISCHE PATENTANMELDUNG

(21) Anmeldenummer: **84106853.9**

(22) Anmeldetag: **15.06.84**

(51) Int. Cl.⁴: **H 04 N 9/81**

(30) Priorität: **25.06.83 DE 3322986**

(43) Veröffentlichungstag der Anmeldung: **09.01.85**
**Patentblatt 85/2**

(84) Benannte Vertragsstaaten: **AT BE CH DE FR GB IT LI LU NL SE**

(71) Anmelder: **TELEFUNKEN Fernseh und Rundfunk GmbH, Göttinger Chaussee 76, D-3000 Hannover 91 (DE)**

(72) Erfinder: **Kluth, Hans–Jürgen, Ing.-grad., Weichselstrasse 11, D-7730 VS-Villingen (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

(54) **Videorecorder mit Aufzeichnung eines oder mehrerer Tonsignale.**

㊐ Bei einem Videorecorder mit Aufzeichnung eines FM-Tonträgers (T1–T4) auf den Schrägspuren wurde vorgeschlagen, zur Verringerung des Übersprechens zwischen Nachbarspuren die Frequenz (f1–f4) des Tonträgers von Halbbild zu Halbbild umzuschalten. Erfindungsgemäß wird bei der Aufnahme der Tonträger (T1m) mit der ersten Frequenz (f1) kontinuierlich dem ersten Videokopf (K1) und der Tonträger (T3m) mit der zweiten Frequenz (f3) kontinuierlich dem zweiten Videokopf (K2) zugeführt. Dadurch wird bei der Wiedergabe eine störungsfreie Umschaltung zwischen den Tonträgern (T1, T2) der beiden Videoköpfe (K1, K2) ermöglicht.

0130437

T E L E F U N K E N
Fernseh und Rundfunk G m b H
Göttinger Chaussee 76

3000 Hannover 91

Hannover, den 09.06.1983
PTL-H Wp/vß        H 83/59

Videorecorder mit Aufzeichnung eines oder mehrerer Tonsignale

Bei den bekannten Video-Aufzeichnungssystemen VHS, Betamax und
Video 2000 wird das Videosignal durch Frequenzmodulation eines
Bildträgers von Halbbild zu Halbbild abwechselnd auf Schrägspuren eines Magnetbandes aufgezeichnet. Das NF-Tonsignal wird
dabei auf einer parallel zur Bandkante verlaufenden Längsspur
aufgezeichnet. Wegen der geringen Längsgeschwindigkeit des
Videobandes in der Größenordnung von 11-24 mm/s ergibt sich
hinsichtlich Bandbreite und Störabstand nur eine begrenzte Tonqualität, die die Hi-Fi-Anforderungen nicht erfüllt.

Zur Verbesserung der Tonqualität ist es bekannt (DE-OS
31 16 130), mit den Videoköpfen ein oder mehrere mit Tonsignalen frequenzmodulierte Tonträger unterhalb des von dem Bildträger eingenommenen Frequenzbereiches aufzuzeichnen. Dadurch
kann wegen der hohen Relativgeschwindigkeit zwischen den Videoköpfen und dem Magnetband eine beträchtliche Verbesserung der
Tonqualität erreicht werden. Diese Art der Tonaufzeichnung, z.
B. mit zwei FM-Tonträgern für Zweisprachenbetrieb oder Stereoton, ist besonders vorteilhaft, wenn der Freuquenzbereich bis etwa 1,1 MHz unterhalb des Frequenzbereiches des modulierten Bildträgers nicht für die Aufzeichnung eines in der Frequenz herabgesetzten Farbträgers von etwa 0,63 MHz benötigt wird und somit dieser Frequenzbereich für die Aufzeichnung mehrerer, frequenzselektiv trennbarer Tonträger frei ist. Die Aufzeichnung eines Farbträgers in diesem Frequenzbereich ist z.B. dann nicht notwendig, wenn gemäß der älteren Anmeldung P 33 14 782.5 der Farbträger vor der Aufzeichnung durch Frequenzverschachtelung mit dem Leuchtdichtesignal kombiniert und zusammen mit diesem durch Frequenzmodulation des Bildträgers aufgezeichnet wird oder gemäß der DE-PS 20 08 956 das Leuchtdichtesignal und die Farbsignale während einer Zeile zeitlich nacheinander zeitkomprimiert aufgezeichnet werden.

Bei der Aufzeichnung mehrerer frequenzmodulierter Tonträger in dem genannten Frequenzbereich können diese Tonträger bei der Wiedergabe durch Filter wieder voneinander getrennt werden, ohne daß ein Übersprechen zwischen diesen Tonträgern auftritt. Andererseits sind in dem genannten Frequenzbereich die durch den Azimutwinkel der Videoköpfe bedingten, zur Übersprechdämpfung benachbarter Spuren dienenden Azimutverluste nicht mehr wirksam. Es kommt daher zu einem Übersprechen zwischen den Tonträgern benachbarter Schrägspuren, so daß zu einem bestimmten Tonsignalabschnitt auch der um 20 ms versetzte Tonsignalabschnitt hörbar werden kann.

Zur Verringerung dieses Übersprechens zwischen den Tonträgern benachbarter Schrägspuren wurde bereits vorgeschlagen (ältere Anmeldung P 33 06 978.6), die Frequenz des Tontägers von Halbbild zu Halbbild zwischen zwei verschiedenen Werten umzuschalten. Dann hat bei der Abtastung einer Schrägspur mit einem Tonträger der ersten Frequenz der Tonträger in beiden benachbarten Schrägspuren die zweite Frequenz, die durch ein auf die erste Frequenz abgestimmtes Filter unterdrückt wird. Durch diese Frequenzänderung des Tonträgers von Schrägspur zu Schrägspur wird also ein Übersprechen der Tonträger zwischen benachbarten Schrägspuren weitestgehend vermieden.

Bei der Wiedergabe muß der Tonkanal zwischen den beiden Videoköpfen umgeschaltet werden, weil die beiden Videoköpfe mit
einer zeitlichen Überlappung von Halbbild zu Halbbild abwechselnd den modulierten Tonträger liefern. Bei einer Umschaltung
zwischen den Tonträgern kann es zu Phasensprüngen kommen, die
nach der FM-Demodulation zu Störungen im NF-Tonsignal führen.
Es wurde bereits vorgeschlagen (ältere Anmeldung P 32 42 557),
während des Überlappungsbereiches mit einer Phasenvergleichsschaltung und einem steuerbaren Phasendreher die beiden Tonträger auf gleiche Phase zu regeln und die Umschaltung dann vorzunehmen, wenn Phasengleichheit erreicht ist.

Wenn die Frequenz des Tonträgers von Halbbild zu Halbbild
zwischen zwei verschiedenen Werten umgeschaltet ist, ergibt sich
bei der Wiedergabe folgende Schwierigkeit. Die Tonträger von den
beiden Videoköpfen haben zwar einen zeitlichen Überlappungsbereich, in dem beide Tonträger vorhanden sind. Beide Tonträger
haben jedoch während dieses Überlappungsbereiches die bei der
Aufnahme vorgenommene Frequenzumschaltung. Der genaue Zeitpunkt
dieser Frequenzumschaltung liegt nicht fest und schwankt durch
unvermeidbare Einflüsse wie z.B. Änderungen der Rotationsgeschwindigkeit der Videoköpfe, der genauen Lage des Magnetbandes
zur Kopftrommel und Dehnungen des Magnetbandes. Es kann dadurch
sogar zu kurzzeitigen Unterbrechungen des Tonträgers kommen.
Durch diese undefinierten Verhältnisse während des Überlapppngsbereiches ist die genannte Maßnahme, während des Überlappungsbereiches die Tonträger auf gleiche Phase zu regeln und dann
die Umschaltung vorzunehmen, nicht mehr ohne weiteres anwendbar.
Es fehlt dafür ein ausreichend langer Überlappungsbereich mit
zwei Tonträgern gleicher Frequenz.

Der Erfindung liegt die Aufgabe zugrunde, bei einem Videorecorder
mit Umschaltung der Tonträgerfrequenz von Halbbild zu Halbbild
eine Wiedergabeschaltung zu schaffen, bei der eine störungsfreie
Umschaltung zwischen den Tonträgern der beiden Videoköpfe möglich ist.

Diese Aufgabe wird durch die im Anspruch 1 beschriebene Erfindung gelöst. Vorteilhafte Weiterbildungen der Erfindung sind in den Unteransprüchen beschrieben.

Bei bekannten Videorecordern wird bei der Aufnahme den beiden Videoköpfen stets das gleiche Signal zugeführt, indem die Videoköpfe parallel oder in Reihe geschaltet sind. Bei der Erfindung wird für die Aufzeichnung des Tonträgers von dieser Lösung abgewichen, indem die beiden Videoköpfe getrennt voneinander unterschiedlich mit dem Tonträger gespeist werden. Der erste Videokopf wird kontinuierlich nur mit dem Tonträger der ersten Freuquenz und der zweite Videokopf kontinuierlich nur mit dem Tonträger der zweiten Frequenz gespeist. Es werden also nicht ständig beide Videoköpfe mit einem Tonträger gespeist, dessen Frequenz umgeschaltet wird. Durch diese Lösung liefert dann bei der Wiedergabe der erste Videokopf ständig nur den Tonträger mit der ersten Frequenz und der zweite Videokopf ständig nur den Tonträger mit der zweiten Frequenz. Das bedeutet, daß in dem Überlappungsbereich bei der Abtastung durch die Videoköpfe keine Frequenzumschaltung des Tonträgers mehr vorliegt, sondern die Tonträger im Überlappungsbereich gleichbleibende Frequenzen haben. Dadurch ergibt sich die Möglichkeit, bei der Wiedergabe während des Überlappungsbereiches die beiden Tonträger auf gleiche Frequenz und Phase zu bringen und dann eine störungsfreie Umschaltung zwischen den Tonträgern von den beiden Videoköpfen vorzunehmen. Für diese Maßnahme ist der Überlappungsbereich ausreichend lang, weil z.B. bei einer Tonträgerfrequenz von 0,5 MHz auf einen Überlappungsbereich von 0,4 ms etwa 200 Trägerperioden fallen. Eine Schaltung mit einer Phasenvergleichsstufe und einem steuerbaren Phasendreher hat also eine genügende Anzahl von Tonträgerperioden zur Verfügung, um die notwendige Phasengleichheit für die Umschaltung herbeizuführen.

Die Erfindung wird im folgenden anhand der Zeichnung an verschiedenen Ausführungsbeispielen erläutert.
Darin zeigen
Fig. 1 ein Frequenzdiagramm zur Erläuterung der Aufzeichnung der Tonträger,

Fig. 2 ein Blockschaltbild für die Aufzeichnung,

Fig. 3 den Aufbau des aufgezeichneten Bildsignals,

Fig. 4 ein Blockschaltbild für die Wiedergabe und

Fig. 5 eine Abwandlung der Schaltung nach Fig. 4.


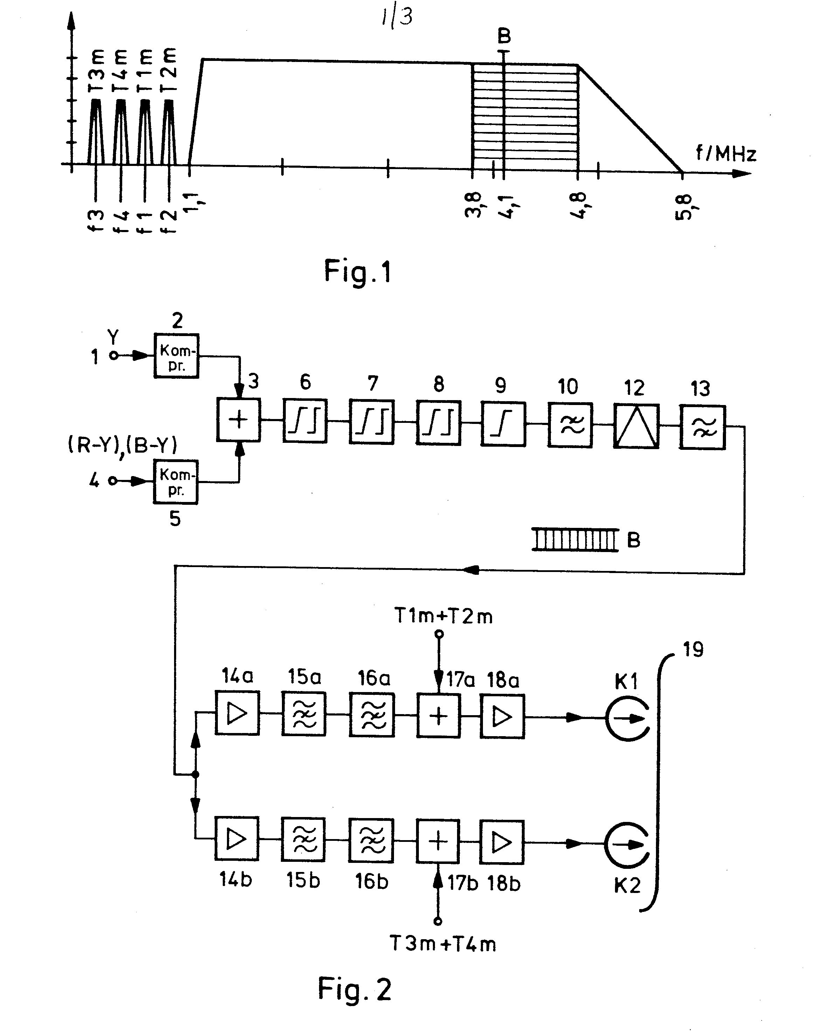

Gemäß Fig. 1 wird ein Bildträger B aufgezeichnet, der mit dem Leuchtdichtesignal Y frequenzmoduliert ist. Der Hubbereich erstreckt sich von 3,8 MHz für den Synchronboden über 4,1 MHz für den Schwarzwert bis 4,8 MHz für den Weißwert. Der Bildträger B nimmt insgesamt einen Frequenzbereich von 1,1 -5,8 MHz ein. Unterhalb von 1,1 MHz sind ein Tonträger T1m mit der Frequenz f1 und ein Tonträger T2m mit der Frequenz f2 aufgezeichnet, die ein Tonsignal in mehreren Sprachen oder ein Stereotonsignal darstellen. Diese Tonträger werden in den ungeradzahligen Halbbildern aufgezeichnet. In den geradzahligen Halbbildern werden die Tonträger T3m mit der Frequenz f3 und T4m mit der Frequenz f4 aufgezeichnet, die mit denselben NF-Signalen wie die Tonträger T1m und T2m frequenzmoduliert sind. Diese Art der Tonaufzeichnung zur Verringerung des Übersprechens zwischen benachbarten Schrägspuren ist näher beschrieben in der älteren Patentanmeldung P 33 14 782. Die genannten Frequenzen haben folgende Werte:

f1 =  0,75 MHz

f2 = 0,992 MHz

f3 =  0,25 MHz

f4 = 0,492 MHz.

Der Index "m" bei den Tonträgern bedeutet, daß es sich um modifizierte Tonträger handelt, deren Frequenzen für die Aufzeichnung gegenüber den genannten Frequenzen von 5,5 und 5,74 MHz verringert sind.


In Fig. 2 wird das Leuchtdichtesignal Y von der Klemme 1 dem Zeitkompressor 2 zugeführt, der das Leuchtdichtesignal Y während der Hinlaufzeit um den Faktor 0,72 von 52 $\mu$s auf etwa 38 $\mu$s zeitlich komprimiert. Das so komprimierte Leuchtdichtesignal Y wird der Addierstufe 3 zugeführt. An der Klemme 4 stehen zeilensequentiell die Farbsignale R-Y und B-Y, die in den Zeitkompressor 5 um den Faktor 5 zeitlich komprimiert und ebenfalls der Addierstufe 3 zugeführt werden. Am Ausgang der Addierstufe 3 steht jeweils in einer Zeile zeitlich nacheinander das zeitkomprimierte Leuchtdichtesignal Y und das zeitkomrpimierte Farbdifferenzsignal R-Y bzw. B-Y. Dieses Signal gelangt über die Preemphasisstufe 6, die zur Bildschärfeerhöhung dienende Stufe 7 und die nichtlineare Preemphasisstufe 8 auf den symmetrisch wirkenden Amplitudenbegrenzer 9, der das Signal symmetrisch bei einem bestimmten Weißwert und Schwarzwert begrenzt. Das so in der Amplitude begrenzte Signal gelangt über den Tiefpaß 10 mit einer Grenzfrequenz von 3 MHz auf den FM-Modulator 12, der über den Hochpaß 13 mit einer Grenzfrequenz von 1,1 MHz den frequenzmodulierten Bildträger B liefert. Der Bildträger B gelangt über den Verstärker 14a und die Filter 15a und 16a auf die Addierstufe 17a. Der Addierstufe 17a werden die Tonträger T1m und T2m additiv zugeführt. Die Filter 15a und 16a sind auf die Frequenzen f1 und f2 abgestimmt, um diese von den Tonträgern T1m und T2m eingenommenen Frequenzbereiche zusätzlich mit hoher Dämpfung von Störungen zu befreien. Das Ausgangssignal der Addierstufe 17a wird über den Verstärker 18a dem Videokopf K1 zugeführt.

Der Weg 14b bis 18b ist entsprechend aufgebaut. Hier werden in der Addierstufe 17b die beiden Tonträger T3m und T4m hinzugefügt, und die Filter 15b und 16b sind entsprechend auf die Frequenzen f3 und f4 abgestimmt. Die beiden Videoköpfe K1 und K2 erhalten also praktisch denselben Bildträger, wobei lediglich unterschiedliche Frequenzbereiche mit den Filtern 15 und 16 unterdrückt sind. Der Videokopf K1 indessen erhält nur die Tonträger T1m und T2m und der Videokopf K2 nur die Tonträger T3m und T4m. Es wird also keine direkte Umschaltung eines den Videoköpfen zugeführten Tonträgers vorgenommen. Der Bildträger B mit den Tonträgern T1m und T2m und der Bildträger B mit den Tonträgern T3m und T4m werden von Halbbild zu Halbbild abwechselnd mit den Videoköpfen K1 und K2 jeweils auf Schrägspuren des Magnetbandes 19 aufgezeichnet.

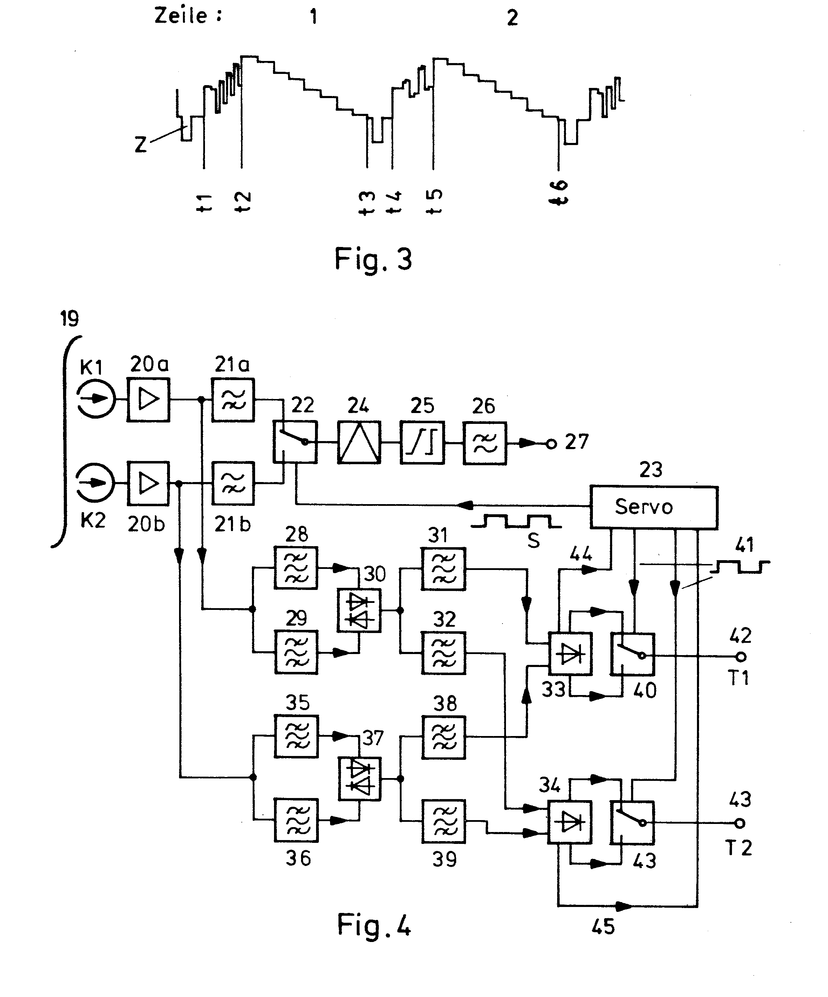

Fig. 3 zeigt das Signal am Ausgang der Addierstufe 3 in Fig. 2. Nach dem Zeilensynchronimpuls Z der Zeile 1 folgt von t1-t2 das um den Faktor 5 zeitkomprimierte Farbdiffenrenzsignal B-Y und von t2-t3 das ebenfalls zeitkomprimierte Leuchtdichtesignal Y. Der Abstand der Zeilensynchronimpulse Z hat den genormten Wert von 64/us. In der darauffolgenden Zeile 2 folgt auf den Zeilensynchronimpuls Z von t4-t5 das um den Faktor 5 zeitkomprimierte Farbdifferenzsignal R-Y und von t5-t6 das ebenfalls zeitkomprimierte Leuchtdichtesignal Y. Dieses Signal wird wie ein übliches Leuchtdichtesignal Y mit dem Bildträger B aufgezeichnet.

In Fig. 4 wird das Magnetband 19mit den beiden Videoköpfen K1 und K2 abgetastet. Der abgetastete Bildträger B gelangt über die Verstärker 20a und 20b sowie die Hochpässe 21a und 21b mit einer Grenzfrequenz von 1,1 MHz auf den Umschalter 22, der von der Servoschaltung 23 mit der 25 Hz-Schaltspannung S so betätigt wird, daß der FM-Demodulator 24 jeweils auf den Ausgang des Videokopfes K1 oder K2 geschaltet ist, der die Abtastung bewirkt. Über die Preemphasisstufe 25 und den Tiefpaß 26 mit einer Grenzfrequenz von 3 MHz wird an der Klemme 27 wieder das Signal gemäß Fig. 3 gewonnen. Aus diesem Signal werden durch zeitliche Trennung der Farbdifferenzsignale und des Leuchtdichtesignals und anschließende Zeitexpansion wieder die für die Bildwiedergabe benötigten Signale R-Y, B-Y und Y jeweils mit der genormten Zeilenhinlaufzeit von 52 /us und Zeilendauer von 64 /us gewonnen.

Mit dem auf f1 abgestimmten Bandpaß 28 und dem auf f2 abgestimmten Bandpaß 29 werden die Tonträger T1m und T2m frequenzselektiv ausgewertet und der Mischstufe 30 zugeführt. Die Mischstufe 30 enthält einen Oszillator mit einer Frequenz von 4,75 MHz und setzt die Tonträgerfrequenzen f1 und f2 auf die genormten Werte von 5,5 und 5,74 MHz um. Der Mischträger von 4,75 MHz ist mit der Zeilenfrequenz verkoppelt und wird durch Frequenzvervielfachung der Zeilensynchronimpulse gewonnen. Das hat den Vorteil, daß die Frequenz und Phase des Mischträgers den Geschwindigkeitsschwankungen der Videoköpfe folgt, so daß
durch diese Mischung Zeitfehler in dem abgetasteten Tonträger
T ausgeglichen werden. Dieses Prinzip der Frequenzumsetzung eines
abgetasteten Trägers mit einem aus den Zeilensynchronimpulsen
gewonnenen Mischträger zur gleichzeitigen Frequenzumsetzung
und Beseitigung von Zeitfehlern ist näher beschrieben in der
DE-PS 20 08 956. Die beiden Tonträger werden über den auf 5,5
MHz abgestimmten Bandpaß 31 und den auf 5,74 MHz abgestimmten
Bandpaß 32 ausgewertet und den beiden Phasenangleichstufen 33,
34 zugeführt.

Auf gleiche Weise werden die Tonträger T3m und T4m vom Videokopf K2 mit dem auf f3 abgestimmten Bandpaß 35 und dem auf f4
abgestimmten Bandpaß 36 ausgewertet und in der Mischstufe 37
mit einem Mischträger mit 5,25 MHz auf die Frequenzen 5,5 MHz
und 5,74 MHz umgesetzt. Diese werden entsprechend mit dem auf
5,5 MHz abgestimmten Bandpaß 38 und dem auf 5,74 MHz abgestimmten Bandpaß 39 ausgewertet und ebenfalls den Stufen 33,34 zugeführt. Die Schaltungen 28-32 und 35-39 sind praktisch gleich.
Sie verarbeiten Tonträger unterschiedlicher Frequenz, liefern
jedoch an ihren Ausgängen Tonträger mit den gleichen Frequenzen
von 5,5 und 5,74 MHz. Die beiden Eingänge der Stufe 33 erhalten
also von Halbbild zu Halbbild abwechselnd den Tonträger T1 mit
5,5 MHz vom Bandpaß 31 und den Tonträger T3 mit 5,5 MHz vom
Bandpaß 38. Mit dem Umschalter 40, der von der Servoschaltung 23
mit der 25 Hz-Schaltspannung 41 gesteuert wird, erfolgt eine
Umschaltung zwischen den Videoköpfen K1 und K2, so daß an der
Klemme 42 ein kontinuierlicher Tonträger mit der Frequenz von
5,5 MHz steht. Auf gleiche Weise arbeitet der Umschalter 43, der
an der Klemme 43 ständig den Tonträger T2 mit der Frequenz von
5,74 MHz liefert. Die Frequenz von 4,75 MHz ist dabei gleich
304 · fH und die Frequenz von 5,25 MHz = 336 · fH, wobei fH die
Zeilenfrequenz ist.

Die Stufen 33,34 haben folgenden Zweck: Mit Beginn des Überlappungsbereiches zwischen den Tonträgern von den Videoköpfen
K1 und K2 werden die den Stufen 33 bzw. 34 zugeführten Tonträger in der Phase verglichen. In Abhängigkeit von diesem Phasenvergleich wird die Phase eines der Tonträger mit einem steuerbaren Phasendreher geändert, bis die beiden zugeführten Tonträger von den Bandpässen 31 und 38 bzw. 32 und 39 in Phase
übereinstimmen. In diesen Zeitpunkt liefern die Stufen 33,34
über die Leitungen 44 bzw. 45 ein Signal an die Servoschaltung
23, das den genauen Umschaltzeitpunkt der Umschalter 40,43 festlegt. Eine derartige Umschaltung zwischen den Videoköpfen mit
Phasenangleichung der Träger vor der Umschaltung ist näher beschrieben in den älteren Patentanmeldungen P 32 42 557 und
P 33 17 645.0.

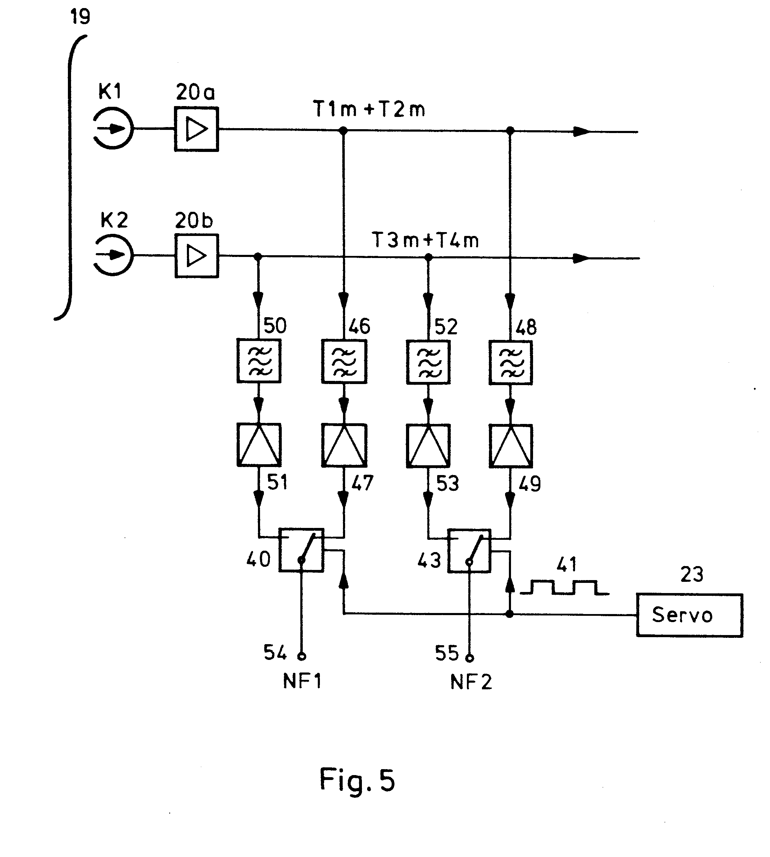

Fig. 5 zeigt eine Abwandlung der Schaltung nach Fig. 4, bei der
die Umschaltung der beiden Tonkanäle nach der FM-Demodulation
im NF-Weg erfolgt. Der Ausgang des Verstärkers 20a ist über
den Bandpaß 46 und den FM-Demodulator 47, die beide auf f1 abgestimmt sind, an den einen Eingang des Umschalters 40 und
außerdem über den Bandpaß 48 und den FM-Demodulator 49, die
beide auf f2 abgestimmt sind, an den einen Eingang des Umschalters 43 angeschlossen. Der Ausgang des Verstärkers 20b ist über
den Bandpaß 50 und den FM-Demodulator 51, die beide auf f3 abgestimmt sind, an den anderen Eingang des Umschalters 40 und
außerdem über den Bandpaß 52 und den FM-Demodulator 53, die beide
auf f4 abgestimmt sind, an den anderen Eingang des Umschalters
43 angeschlossen. Die Umschalter 40, 43 werden von der Servoschaltung 23 wiederum mit der 25 Hz-Schaltspannung 41 gesteuert.
An der Klemme 54 steht das Tonsignal NF1, mit dem die Tonträger
T1m und T3m frequenzmoduliert sind. An der Klemme 55 steht das
zweite Tonsignal NF2, mit dem die Tonträger T2m und T4m frequenzmoduliert sind. In der dargestellten Stellung der Schalter 40,
43 bewirkt der Kopf K1 die Abtastung, während der Videokopf K2
nicht an der Abtastung beteiligt ist. Während der Abtastung durch
den Videokopf K2 sind die Schalter 40,43 durch die Schaltspannung 41 in ihre linke Stellung umgelegt. Die beiden Signale NF1
und NF2 können den Ton in verschiedenen Sprachen oder ein Stereosignal darstellen. Eine Umsetzung der Frequenzen f1-f4 der modifizierten Tonträger T1m-T4m auf Tonträger T1 und T2

0130437
H 83/59

mit den Originalfrequenzen von 5,5 MHz und 5,74 MHz gemäß
Fig. 4 ist hier nicht notwendig, weil die FM-Demodulation unmittelbar bei den Frequenzen f1-f4 erfolgen kann. Der Zeitpunkt der Umschaltung der Umschalter 40,43 ist hier im Gegensatz zu Fig. 4 weniger kritisch, weil die Umschaltung im Weg
des NF-Signales erfolgt und somit keine Störungen durch Phasensprünge auftreten können.

P a t e n t a n s p r ü c h e

1. Videorecorder mit Aufzeichnung eines oder mehrerer Tonsignale (NF1, NF2) jeweils durch Frequenzmodulation eines Tonträgers (T1-T4),der zusammen mit dem Bildträger (B) abwechselnd mit zwei Videoköpfen (K1,K2) auf je ein Halbbild enthaltenden Schrägspuren eines Magnetbandes (19) aufgezeichnet wird und dessen Frequenz (f1-f4) von Halbbild zu Halbbild zwischen zwei verschiedenen Werten (f1/f3; f2/f4) umgeschaltet ist, dadurch gekennzeichnet, daß bei der Aufnahme der Tonträger (T1,T2) mit dem ersten Frequenzwert (f1, f2) dem ersten Videokopf (K1) und der Tonträger (T3,T4) mit dem zweiten Frequenzwert (f3,f4) dem zweiten Videokopf (K2) zugeführt wird.

2. Recorder nach Anspruch 1, dadurch gekennzeichnet, daß jeweils im Weg des modulierten Bildträgers (B) zu einem Videokopf (K1,K2) ein Filter (15,16) liegt, das den Frequenzbereich des diesem Videokopf (K1,K2) zugeführten Tonträgers (T1-T4) unterdrückt.

3. Recorder nach Anspruch 1, dadurch gekennzeichnet, daß der Tonträger (T1-T4) bei der Aufnahme und/ oder bei der Wiedergabe mit einem Mischträger auf eine andere Frequenz umgesetzt wird.

4. Recorder nach Anspruch 3, dadurch gekennzeichnet, daß die Frequenz des Mischträgers mit der Zeilenfrequenz des Fernsehsignals verkoppelt ist.

5. Recorder nach Anspruch 4, dadurch gekennzeichnet, daß bei der Wiedergabe der Mischträger durch Frequenzvervielfachung aus den Zeilensynchronimpulsen des vom Band (19) abgetasteten Fernsehsignals gewonnen ist.

6. Recorder nach Anspruch 1, dadurch gekennzeichnet, daß bei der Wiedergabe die Umschaltung des Tonträgers (T1-T4) zwischen den Videoköpfen (K1,K2) im Weg des Tonträgers (T1-T4) erfolgt, nachdem dieser durch Mischung auf von Halbbild zu Halbbild gleiche Frequenz gebracht ist.

7. Recorder nach Anspruch 6, dadurch gekennzeichnet, daß vor der Umschaltung eine Phasendreh- und Meßschaltung (33,34) vorgesehen ist, die die Tonträger von den beiden Videoköpfen (K1,K2) während ihres Überlapppungsbereiches auf gleiche Phase bringt und dann die Umschaltung (40,43) auslöst (Fig. 4).

8. Recorder nach Anspruch 1, dadurch gekennzeichnet, daß die Tonträger von den Videoköpfen (K1,K2) getrennten FM-Demodulatoren (51,47,53,49) zugeführt sind und die Umschaltung des Tonkanals (54,55) zwischen den Videoköpfen (K1,K2) im NF-Weg hinter den Demodulatoren erfolgt (Fig. 5).

Fig.1

Fig. 2

Fig. 3

Fig. 4

Fig. 5